# EUROPÄISCHE PATENTANMELDUNG

(11) **EP 1 503 472 A2**
(43) Veröffentlichungstag der Anmeldung: **02.02.2005**
(21) Anmeldenummer: 04016301.6
(22) Anmeldetag: 10.07.2004
(51) Int. Cl.: H02H 7/085

(54) **Betriebsvorrichtung für ein Stellsystem**

(30) Priorität: 26.07.2003 DE 10334190
(71) Anmelder: elero GmbH, 72660 Beuren (DE)
(72) Erfinder: Walddörfer, Dieter, 73252 Lenningen (DE)
(74) Vertreter: Ruckh, Rainer Gerhard, Dr.

(57) **Zusammenfassung**

Die Erfindung betrifft eine Antriebsvorrichtung (1) für ein Stellsystem (2) mit einem Antrieb (3), welcher mit einer eine Versorgungsspannung bildenden Wechselspannung gespeist ist, mit einer Steuereinheit (17) und dieser zugeordneten Schaltmitteln (18), mittels derer in Abhängigkeit der Drehzahl des Antriebs (3) eine phasenempfindliche Zuschaltung der Versorgungsspannung auf den Antrieb (3) durchführbar ist.

## Beschreibung

Die Erfindung betrifft ein Antriebsvorrichtung für ein Stellsystem.

Derartige Stellsysteme können von Markisen, Rolläden und dergleichen gebildet sein, welche mittels eines Antriebs entlang eines definierten Fahrweges zwischen einer oberen und unteren Endposition verfahrbar sind.

Bei bekannten Antriebsvorrichtungen dieser Art sind zur Kontrolle des Fahrweges des jeweiligen Stellsystems mechanische Endschalter vorgesehen. Sobald das entlang des Fahrweges bewegte Stellsystem die durch einen mechanischen Endschalter vorgegebene Endposition erreicht, schaltet der Endschalter den Antrieb ab.

Nachteilig hierbei ist zum einen, dass derartige Endschalter einen aufwendigen mechanischen Aufbau aufweisen. Zudem ist die Montage und Justage derartiger Endschalter an der Antriebsvorrichtung kompliziert und zeitaufwendig.

Ein weiterer gravierender Nachteil derartiger Endschalter besteht darin, dass mit diesen nur die Einschaltung der Endpositionen des Stellsystems überwacht werden kann. Jedoch können mit diesen Endschaltern keine Unregelmäßigkeiten der Bewegung des Stellsystems entlang des Fahrweges überwacht werden.

Aus der DE 44 40 449 A1 ist eine Antriebsvorrichtung bekannt, die eine erweiterte Kontrolle des Fahrweges eines Stellsystems ermöglicht. Hierzu wird die Drehzahl des als Elektromotors ausgebildeten Antriebs fortlaufend erfasst. Überschreitet der aktuelle Wert des Drehmoments einen vorgegebenen Grenzwert, so wird der Elektromotor aus Sicherheitsgründen abgeschaltet.

Damit wird ein Schutz der Antriebsvorrichtung gegen Beschädigungen für den Fall erreicht, dass das Stellsystem während des Fahrweges gegen ein Hindernis oder dergleichen aufläuft. Die durch das Hindernis bewirkte Blockierung des Stellsystems führt zu einer Erhöhung des Drehmoments des Elektromotors, so dass der Drehmomentgrenzwert überschritten wird und dadurch der Antrieb deaktiviert wird.

Nachteilig hierbei ist, dass mit diesem System nur Fehlerfälle beim Betrieb der Antriebsvorrichtung aufgedeckt werden können, wobei dies zu einer Abschaltung des Antriebs führt und dadurch auch zwangsläufig zu einer Reduzierung der Verfügbarkeit der Antriebsvorrichtung.

Der Erfindung liegt die Aufgabe zugrunde eine Antriebsvorrichtung bereitzustellen, mittels derer ein rationeller und sicherer Betrieb des Stellsystems bei hoher Verfügbarkeit gewährleistet ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Antriebsvorrichtung für ein Stellsystem weist einen Antrieb auf, welcher mit einer eine Versorgungsspannung bildenden Wechselspannung gespeist ist. Weiterhin weist die erfindungsgemäße Antriebsvorrichtung ein Stellsystem eine Steuereinheit auf, welcher Schaltmittel zugeordnet sind, mittels derer in Abhängigkeit der Drehzahl des Antriebs eine phasenempfindliche Zuschaltung der Versorgungsspannung auf den Antrieb durchführbar ist.

Der Grundgedanke der Erfindung besteht darin, durch die drehzahlabhängige phasensensitive Ansteuerung die Energiezufuhr des Antriebs an das aktuell benötigte Drehmoment anzupassen.

Dadurch wird nicht nur ein energiesparender Betrieb der Antriebsvorrichtung erzielt. Vielmehr kann dadurch auch die Auslegung des Antriebs hinsichtlich seiner Herstellkosten optimiert werden.

Der Antrieb der Antriebsvorrichtung ist vorzugsweise als Elektromotor ausgebildet, wobei die Antriebsvorrichtung zum Antrieb verschiedenartiger Stellsysteme wie zum Beispiel Markisen, Jalousien, Rollläden, Innenrollos oder Screens eingesetzt werden. Weiterhin kann die Antriebsvorrichtung einen Schubspindelantrieb aufweisen, der zum Beispiel für ein Beschattungssystem eingesetzt wird.

Bei derartigen Systemen wird das Stellsystem typischerweise zwischen definierten Endpositionen längs eines Fahrweges bewegt.

Ein hohes Drehmoment des Antriebs wird bei Anfahren des Stellsystems aus einer Endposition benötigt. Dagegen ist das benötigte Drehmoment des Antriebs bei der Bewegung des Stellsystems geringer. Bei der erfindungsgemäßen Antriebsvorrichtung ist die Energiezufuhr des Antriebs derart angepasst, dass der Antrieb zu jedem Zeitpunkt gerade nur das benötigte Drehmoment liefert. Durch die Vermeidung unnötiger Energiezufuhr wird ein Überhitzen des Antriebs vermieden, wodurch die Einschaltdauer der Antriebsvorrichtung erhöht wird.

Damit wird das bei bekannten Antriebsvorrichtungen auftretende Problem gelöst, dass der Antrieb während des Betriebs der Antriebsvorrichtung plötzlich abschaltet. Dies führt zu einer erhöhten Sicherheit des Betriebs der Antriebsvorrichtung. Ein Beispiel hierfür ist der Betrieb einer Jalousie oder einer Markise. Bei starkem Wind oder ähnlichen auf das Stellsystem einwirkenden Belastungen wird typischerweise über einen Einfahrbefehl das Einfahren der Jalousie oder Markise in eine Endposition eingeleitet, um dadurch Beschädigungen dieses Stellsystems zu vermeiden. Bei einem Überhitzen des Antriebs schaltet dieser während der Einfahrbewegung ab. Da dann die Einfahrbewegung des Stellsystems nicht mehr zu Ende geführt werden kann, besteht eine große Gefahr einer Beschädigung des Stellsystems. Derartige unerwünschte Fahrunterbrechungen des Stellsystems aufgrund einer Überhitzung des Antriebs werden mit der erfindungsgemäßen Antriebsvorrichtung weitgehend vermieden.

Bei komplexen Mehrfachanordnungen von Stellsystemen werden vermehrt auch Bussysteme zu deren Steuerung eingesetzt. Bei derartigen Steuerungen müssen bislang Zwangspausen für die anzusteuernden Stellsysteme vorgesehen werden, damit die entsprechenden Antriebe nicht erhitzen. Durch den Einsatz der erfindungsgemäßen Antriebsvorrichtung brauchen derartige Zwangspausen nur noch in geringerem Umfang vorgesehen werden, wodurch die Verfügbarkeit derartiger Bussysteme erheblich erhöht wird.

Aufgrund geltender Normvorschriften sind die Antriebe von Antriebsvorrichtungen für Stellsysteme derart auszulegen, dass die Antriebe einerseits bei bestimmten Unterspannungen noch anziehen müssen und andererseits bei Überspannungen nicht zu schnell überhitzen dürfen. Diese Anforderungen werden durch eine geeignete Wicklungsauslegung der als Elektromotoren ausgebildeten Antriebe erfüllt. Dabei müssen die Wicklungen entsprechend groß ausgelegt werden, um diese Anforderungen zu erfüllen. Dies führt zu einem erhöhten Materialeinsatz und dadurch bedingt zu unerwünscht hohen Herstellkosten. Zudem weisen die Antriebe ein unerwünscht hohes Bauvolumen auf.

Bei den Antriebsvorrichtungen für die genannten Stellsysteme sind die maximalen Außendurchmesser der Antriebe begrenzt. Typischerweise sind die Antriebe als Einsteckrohrantriebe ausgebildet. Die durch die Normvorschriften bedingte Wicklungsauslegung führt daher bei bekannten Antrieben zu unerwünscht großen Baulängen.

Bei der erfindungsgemäßen Antriebsvorrichtung wird durch die drehzahlabhängige, phasensensitive Ansteuerung des Antriebs eine optimierte Energiezufuhr des Antriebs erhalten. Dadurch wird die Erwärmung des Antriebs während des Betriebs des Stellsystems auf ein Minimum reduziert. Dies wiederum bedeutet, dass die Wicklungen des Antriebs kleiner als die Wicklungen von herkömmlichen Antrieben ausgelegt werden können. Dabei wird der Umstand ausgenutzt, dass längs des Fahrwegs eines Stellsystem nur punktuell Spitzenbelastungen des Antriebs auftreten. Anhand des bekannten Belastungsverlaufs braucht die Wicklungsauslegung des Antriebs nicht mehr auf den Spitzenwert der Belastung des Antriebs ausgelegt werden. Vielmehr kann die Wicklung entsprechend der mittleren Belastung des Antriebs ausgelegt werden. Dies führt zu einer erheblichen Kosteneinsparung sowie einer signifikanten Reduzierung des Bauvolumens beziehungsweise der Baulänge des Antriebs.

Je nach Einsatzort der Antriebsvorrichtung können die als Versorgungsspannungen verwendeten Netzspannungen variieren. Typischerweise variieren die zur Verfügung stehenden Netzspannungen in einem Bereich zwischen 220 V und 260 V. Zur Erfüllung der geltenden Normvorschriften sind die Wicklungen des Antriebs der Antriebsvorrichtung entsprechend ausgelegt, wobei diese Auslegung auf eine bestimmte Netzspannung bezogen ist. Damit kann der Antrieb jedoch üblicherweise nicht bei anderen Netzspannungen eingesetzt werden. Dies bedeutet, dass die Wicklungen des Antriebs individuell für unterschiedliche Netzspannungen ausgelegt werden müssen. Der damit verbundene Aufwand bei der Fertigung derartiger Systeme ist unerwünscht hoch.

Bei der erfindungsgemäßen Antriebsvorrichtung kann durch eine geeignete Einstellung der Ansteuerung des Antriebs und damit allein durch Vorgabe elektronischer Parameter eine Anpassung des Antriebs an unterschiedliche Netzspannungen erfolgen, was den Fertigungs- und den Logistikaufwand bei der Herstellung und der Lagerhaltung derartiger Systeme erheblich reduziert.

Die Erfindung wird im Nachstehenden anhand der Zeichnungen erläutert. Es zeigen:
- Figur 1:: Blockschaltbild einer Antriebsvorrichtung für ein Stellsystem.
- Figur 2:: Schematische Darstellung der Komponenten zur Ansteuerung des Antriebs für eine Antriebsvorrichtung gemäß Figur 1.
- Figuren 3a-c:: Verschiedene Ausführungsformen einer phasensensitiven Ansteuerung des Antriebs gemäß Figur 2.

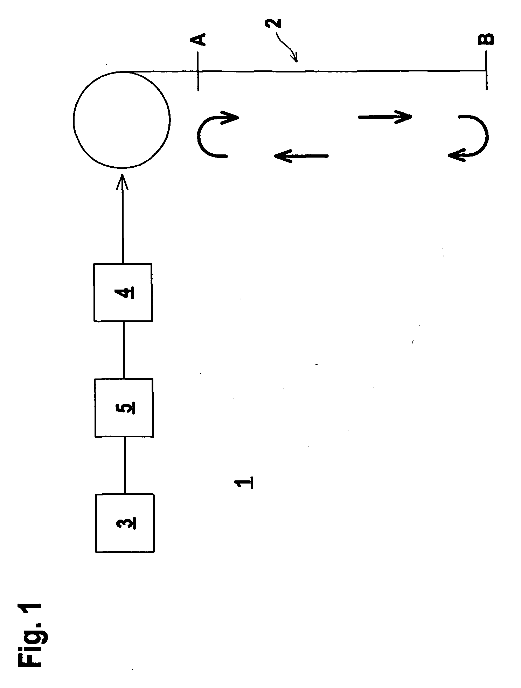

Figur 1 zeigt schematisch eine Antriebsvorrichtung 1 für ein Stellsystem 2. Das Stellsystem 2 ist im vorliegenden Fall von einem Rollladen gebildet, der zwischen einer oberen Endposition A und einer unteren Endposition B längs eines Fahrweges verfahrbar ist.

Die Antriebsvorrichtung 1 weist einen als Elektromotor ausgebildeten Antrieb 3 auf. Der Antrieb 3 ist bevorzugt als Einsteckrohrantrieb ausgebildet.

Der Antrieb 3 ist über ein Getriebe 4 an das Stellsystem 2 gekoppelt, mittels dessen die vom Antrieb 3 erzeugte Rotationsbewegung einer Antriebswelle in eine Hubbewegung des Stellsystems 2 umgesetzt wird.

Zwischen dem Antrieb 3 und dem Getriebe 4 ist eine Bremse 5 zur Abbremsung der Hubbewegung des Stellsystems 2 vorgesehen. Prinzipiell kann die Bremse 5 auch dem Getriebe 4 nachgeordnet sein. Im vorliegenden Fall wird eine berührungslos arbeitende Bremse 5 wie zum Beispiel eine Wirbelstrombremse, eine Hysteresebremse, eine Gegenstrombremse oder eine Flüssigkeitsbremse eingesetzt. Prinzipiell kann auch eine Federkraftbremse oder dergleichen eingesetzt werden.

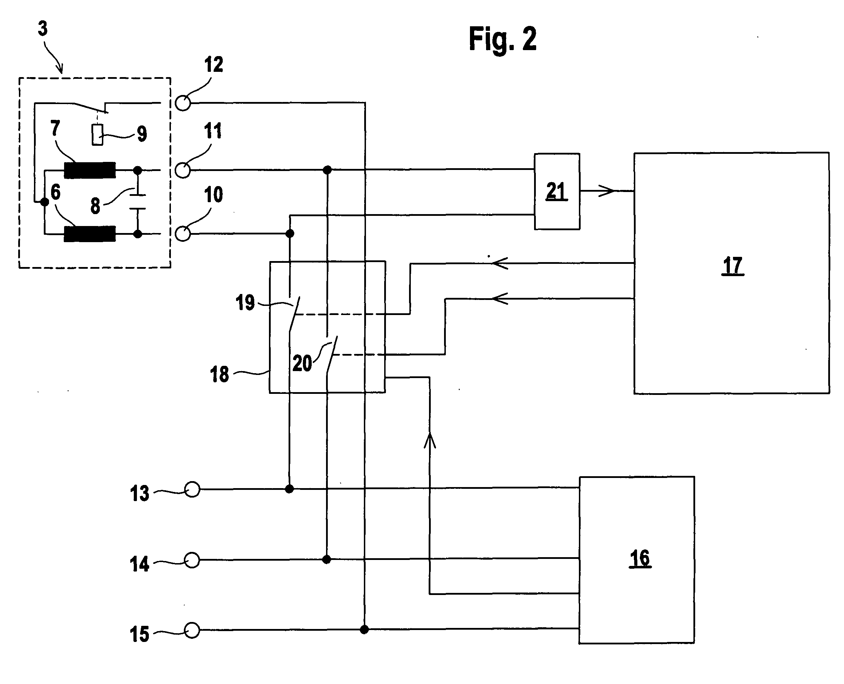

Figur 2 zeigt schematisch die Schaltungsanordnung zur Ansteuerung des Antriebs 3 der Antriebsvorrichtung 1 gemäß Figur 1. Der als Elektromotor ausgebildete Antrieb 3 weist zwei Motorwicklungen 6 ,7 auf, die über einen Motorkondensator 8 gekoppelt sind. Weiterhin weist der Antrieb 3 einen Motorthermostat 9 auf. Schließlich weist der Antrieb 3 drei Motoranschlüsse 10, 11, 12 auf, über welche dieser an die Steuerungskomponenten und an eine als Wechselspannung ausgebildete Versorgungsspannung angeschlossen ist.

Die Motoranschlüsse 10, 11, 12 stehen mit Zuleitungsanschlüssen 13, 14, 15 einer Zuleitung in Verbindung, an welche eine Stromversorgungseinrichtung 16 angeschlossen ist.

Die Zuleitung mit den Zuleitungsanschlüssen 13, 14, 15 stellt die notwendigen Ströme für einen Rechts- und Linkslauf des Antriebs 3 zur Verfügung, mit welchen eine Auf- oder Abwärtsbewegung des Stellsystems 2 durchgeführt wird.

Zur Steuerung des Antriebs 3 ist eine Steuereinheit 17 vorgesehen, welche von einem Mikroprozessor mit einer integrierten Speichereinheit gebildet ist. Weiterhin sind Schaltmittel 18 zur Ansteuerung des Antriebs 3 vorgesehen. Die Steuereinheit 17 und die Schaltmittel 18 sind über entsprechende Leitungen an die Stromversorgungseinheit 16 angeschlossen.

Die von der Steuereinheit 17 angesteuerten Schaltmittel 18 weisen im vorliegenden Fall zwei Schalter bildende Leistungshalbleiter 19, 20 auf, wobei jeweils ein Schalter an einen der zu einer Motorwicklung 6, 7 des Antriebs 3 führenden Motoranschlüsse 10, 11 angeschlossen ist. Von diesen beiden Motoranschlüssen 10, 11 führen zudem Leitungen auf eine Phasenmesseinrichtung 21, welche an die Steuereinheit 17 angeschlossen ist. Prinzipiell können die Schaltmittel 18 auch nur einen Schalter aufweisen.

Mit der Phasenmesseinrichtung 21 wird die Phasendifferenz der durch die Motorwicklungen 6, 7 des Antriebs 3 fließenden Ströme erfasst. Diese Phasenverschiebung wird in der Steuereinheit 17 zur Ermittlung der aktuellen Drehzahl des Antriebs 3 verwendet.

Mit der Phasenmesseinrichtung 21 erfolgt somit eine sensorlose Erfassung der Drehzahl des Antriebs 3.

Alternativ können auch andere sensorlose Systeme eingesetzt werden. Beispielsweise können in der Antriebsvorrichtung 1 vorgesehene Positioniersysteme zur Drehzahlbestimmung des Antriebs 3 verwendet werden. Zur Positionsbestimmung des Antriebs 3 und damit des Stellsystems 2 werden üblicherweise Impulszählverfahren eingesetzt. Die Antriebsbewegung des Antriebs 3 wird durch Zählen periodischer Pulse in der Steuereinheit 17 erfasst. Durch die Registrierung der Periodendauer der Zählimpulsen wird ein Maß für die Drehzahl des Antriebs 3 erhalten.

In einer alternativen Ausgestaltung können auch Sensoren wie zum Beispiel piezoelektrische Sensoren, druckempfindliche Widerstände oder Dehnmessstreifen zur Ermittlung des Drehmoments bzw. der Drehzahl des Antriebs 3 verwendet werden.

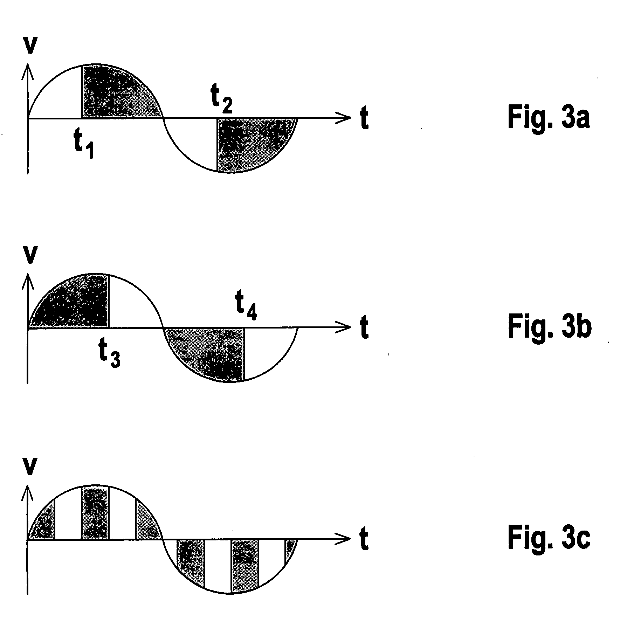

Die Funktionsweise der Schaltungsanordnung gemäß Figur 2 wird im Folgenden anhand der Figuren 3a-c erläutert, die unterschiedliche Möglichkeiten der Ansteuerung des Antriebs 3 zeigen.

Generell erfolgt die Ansteuerung des Antriebs 3 in Abhängigkeit der Drehzahl des Antriebs 3, die wiederum ein Maß für die aktuelle Drehmomentbelastung des Antriebs 3 liefert.

Im vorliegenden Fall erfolgt ein drehzahlgeregelter Betrieb des Antriebs 3, wobei die Phasenmesseinrichtung 21 die Drehzahl-Istwerte für die in der Steuereinheit 17 durchgeführte Drehzahlregelung liefert. Alternativ kann eine Steuerung des Antriebs 3 in Abhängigkeit einer in der Steuereinheit 17 abgespeicherten Kennlinie erfolgen. Hierbei wird der Umstand ausgenutzt, dass der das Stellsystem 2 bildende Rollladen zwischen den Endpositionen A und B längs eines definierten Fahrweges verfahren wird. In einem Einlemvorgang kann die Drehmomentenbelastung, das heißt die Drehzahl des Antriebs 3 über den Fahrweg ermittelt und als Kennlinie abgespeichert werden. Während des Betriebs des Stellsystems 2 erfolgt dann die Steuerung des Antriebs 3 in Abhängigkeit dieser Kennlinie.

Die drehzahlabhängige Ansteuerung des Antriebs 3 erfolgt derart, dass die Energiezufuhr an die aktuelle Drehzahlbelastung angepasst wird. Hierzu werden über die Steuereinheit 17 in Abhängigkeit der aktuellen Drehzahlwerte die Schaltmittel 18 derart angesteuert, dass eine phasensensitive Zuschaltung der Versorgungsspannung auf den Antrieb 3 erfolgt. Das bedeutet, dass über einer Periode der Versorgungsspannung diese nur während definierte Teilintervalle auf den Antrieb 3 geschaltet wird.

Figur 3a zeigt als erstes Beispiel dieser phasenempfindlichen Ansteuerung eine Phasenanschnittssteuerung des Antriebs 3. Bei dieser Ansteuerung sind zu Beginn jeder Halbperiode in Figur 3a dargestellten und mit V bezeichneten sinusförmigen Versorgungsspannung die Schaltmittel 18 so geschaltet, dass der Antrieb 3 von der Versorgungsspannung getrennt ist. Erst ab den mit t₁ und t₂ bezeichneten Zeitpunkten werden die Schaltmittel 18 umgeschaltet, so dass dann der Antrieb 3 mit der Versorgungsspannung gespeist wird. Durch die Variation der Schaltzeitpunkte t₁ und t₂ innerhalb der Halbwellen der Versorgungsspannung kann die Energiezufuhr des Antriebs 3 definiert verändert werden.

Bei einer Phasenanschnittssteuerung gemäß Figur 3a weisen die Schaltmittel 18 als Leistungshalbleiter 19, 20 insbesondere Triacs auf.

Figur 3b zeigt als zweites Beispiel einer phasensensitiven Ansteuerung eine Phasenabschnittssteuerung des Antriebs 3. In diesem Fall wird innerhalb der ersten Halbwellen der sinusförmigen Versorgungsspannung über die Schaltmittel 18 bis zu einem Zeitpunkt t₃ der Antrieb 3 mit der Versorgungsspannung gespeist. Zum Zeitpunkt t₃ werden die Schaltmittel 18 derart betätigt, so dass durch den Phasenabschnitt dann für den Rest der Halbwelle keine Energiezufuhr zum Antrieb 3 mehr erfolgt. Dasselbe gilt für die zweiten Halbwellen, wobei hier wie in Figur 3b dargestellt der entsprechende Schaltzeitpunkt mit t₄ bezeichnet ist.

Auch hier kann durch eine geeignete Wahl der Schaltzeitpunkte t₃ und t₄ die Energiezufuhr des Antriebs 3 in definierter Weise eingestellt werden.

Bei einer Phasenabschnittssteuerung gemäß Figur 3b weisen die Schaltmittel 18 als Leistungshalbleiter 19, 20 Leistungstransistoren wie zum Beispiel IGBT oder CoolMOS, das heißt spezielle MOSFET-Transistoren auf.

Diese Leistungshalbleiter 19, 20 eignen sich auch zur Durchführung der in Figur 3c dargestellten Pulsweitenmodulationssteuerung.

In diesem Fall wird über eine Periode der sinusförmigen Netzspannung durch entsprechende Taktung der Schaltmittel 18 eine gepulste Zufuhr der Netzspannung auf den Antrieb 3 bewirkt. Die Pulsweiten der Pulse werden über die Steuereinheit 17 moduliert, wodurch die Zeitdauer innerhalb einer Periode der Versorgungsspannung, über welche die Versorgungsspannung dem Antrieb 3 zugeführt wird, einstellbar ist.

Durch die phasenempfindliche Ansteuerung des Antriebs 3 gemäß den Ausführungsformen gemäß den Figuren 3a-c wird dessen Energiezufuhr schnell und präzise an die aktuelle Drehmomentenbelastung angepasst.

Bei dem von dem Rollladen gebildeten Stellsystem 2 gemäß Figur 1 ist die Drehmomentenbelastung des Antriebs 3 bei der Anfahrt des Stellsystems 2 aus einer Endposition A oder B maximal. Hier werden vorzugsweise während der gesamten Periode der Versorgungsspannung die Schaltmittel 18 derart eingeschaltet, dass der Antrieb 3 mit der Versorgungsspannung gespeist wird.

Während der darauffolgenden Bewegung des Stellsystems 2 entlang des Fahrweges ist die Drehmomentenbelastung des Antriebs 3 geringer, so dass durch eine geeignete Steuerung der Schaltmittel 18 die Energiezufuhr reduziert werden kann. Durch die hierbei eingesetzte phasensensitive Ansteuerung des Antriebs 3 gemäß den Figuren 3a-c kann die dem Antrieb 3 zugeführte Energie auch plötzlich und stark reduziert werden. Herkömmliche Federkraftbremsen können dieser raschen Änderung nur unzureichend folgen, was ein Abfallen und Flattern der Bremse 5 zur Folge hat. Dies führt insbesondere auch zu unerwünschten Brummgeräuschen. Derartige Schwierigkeiten treffen bei berührungslos arbeitenden Bremsen 5 nicht auf, so dass diese bevorzugt eingesetzt werden.

Für den Fall, dass für die Antriebsvorrichtung 1 Federkraftbremsen eingesetzt werden, eignet sich insbesondere die Phasenabschnittssteuerung gemäß Figur 3b oder die Pulsweitenmodulationssteuerung gemäß Figur 3c aufgrund des gegenüber der Ausführungsform gemäß Figur 3a größeren Regelbereichs der Energiezufuhr.

### Bezugszeichenliste

- (1): Antriebsvorrichtung
- (2): Stellsystem
- (3): Antrieb
- (4): Getriebe
- (5): Bremse
- (6): Motorwicklung
- (7): Motorwicklung
- (8): Motorkondensator
- (9): Motorthermostat
- (10): Motoranschluss
- (11): Motoranschluss
- (12): Motoranschluss
- (13): Zuleitungsanschluss
- (14): Zuleitungsanschluss
- (15): Zuleitungsanschluss
- (16): Stromversorgungseinrichtung
- (17): Steuereinheit
- (18): Schaltmittel
- (19): Leistungshalbleiter
- (20): Leistungshalbleiter
- (21): Phasenmesseinrichtung

- A: Endposition
- B: Endposition
- t₁: Zeitpunkt
- t₂: Zeitpunkt
- t₃: Zeitpunkt
- t₄: Zeitpunkt

## Patentansprüche

1. Antriebsvorrichtung für ein Stellsystem mit einem Antrieb, welcher mit einer eine Versorgungsspannung bildenden Wechselspannung gespeist ist, mit einer Steuereinheit und dieser zugeordneten Schaltmitteln, mittels derer in Abhängigkeit der Drehzahl des Antriebs eine phasenempfindliche Zuschaltung der Versorgungsspannung auf den Antrieb durchführbar ist.

2. Antriebsvorrichtung für ein Stellsystem nach Anspruch 1, **dadurch gekennzeichnet, dass** mittels der Schaltmittel (18) eine Phasenanschnittssteuerung durchführbar ist.

3. Antriebsvorrichtung für ein Stellsystem nach Anspruch 1, **dadurch gekennzeichnet, dass** mittels der Schaltmittel (18) eine Phasenabschnittssteuerung durchführbar ist.

4. Antriebsvorrichtung für ein Stellsystem nach Anspruch 1, **dadurch gekennzeichnet, dass** mittels der Schaltmittel (18) eine Pulsweitenmodulationssteuerung durchführbar ist.

5. Antriebsvorrichtung für ein Stellsystem nach einem der Ansprüche 1 - 4, **dadurch gekennzeichnet, dass** die Schaltmittel (18) wenigstens einen einen Schalter bildenden Leistungshalbleiter (19) aufweisen.

6. Antriebsvorrichtung für ein Stellsystem nach einem der Ansprüche 1 - 5, **dadurch gekennzeichnet, dass** mittels der Steuereinheit (17) eine Drehzahlregelung zur Ansteuerung des Antriebs (3) durchführbar ist.

7. Antriebsvorrichtung für ein Stellsystem nach Anspruch 6, **dadurch gekennzeichnet, dass** mittels eines Sensorsystems die Drehzahl des Antriebs (3) erfassbar ist.

8. Antriebsvorrichtung für ein Stellsystem nach Anspruch 7, **dadurch gekennzeichnet, dass** mittels eines sensorlosen Systems die Drehzahl des Antriebs (3) erfassbar ist.

9. Antriebsvorrichtung für ein Stellsystem nach einem der Ansprüche 1 - 5, **dadurch gekennzeichnet, dass** in der Steuereinheit (17) der Drehzahlverlauf in Abhängigkeit des Verfahrwegs des Stellsystems (2) als Kennlinie abgespeichert ist, und dass die Ansteuerung des Antriebs (3) in Abhängigkeit dieser Kennlinie erfolgt.

10. Antriebsvorrichtung für ein Stellsystem nach einem der Ansprüche 1 - 9, **dadurch gekennzeichnet, dass** mittels der phasenempfindlichen Ansteuerung die Energiezufuhr des Antriebs (3) an das aktuell benötigte Drehmoment angepasst ist.

11. Antriebsvorrichtung für ein Stellsystem nach einem der Ansprüche 1 - 10, **dadurch gekennzeichnet, dass** mittels der phasenempfindlichen Ansteuerung des Antriebs (3) Schwankungen oder Variationen der Versorgungsspannung kompensierbar sind.

12. Antriebsvorrichtung für ein Stellsystem nach einem der Ansprüche 1 - 11, **dadurch gekennzeichnet, dass** der Antrieb (3) von einem Elektromotor gebildet ist.

13. Antriebsvorrichtung für ein Stellsystem nach einem der Ansprüche 1 - 12, **dadurch gekennzeichnet, dass** das Stellsystem (2) über ein Getriebe (4) an den Antrieb (3) gekoppelt ist.

14. Antriebsvorrichtung für ein Stellsystem nach Anspruch 13, **dadurch gekennzeichnet, dass** diese eine Bremse (5) aufweist.

15. Antriebsvorrichtung für ein Stellsystem nach Anspruch 14, **dadurch gekennzeichnet, dass** die Bremse (5) zwischen dem Antrieb (3) und dem Getriebe (4) angeordnet ist.

16. Antriebsvorrichtung für ein Stellsystem nach einem der Ansprüche 14 oder 15, **dadurch gekennzeichnet, dass** die Bremse (5) berührungslos arbeitet.

17. Antriebsvorrichtung für ein Stellsystem nach einem der Ansprüche 1 - 16, **dadurch gekennzeichnet, dass** das Stellsystem (2) von einem Tor, einer Markise, einer Jalousie, einem Rolladen, einem Innenrollo oder einem Screen gebildet ist.

18. Antriebsvorrichtung für ein Stellsystem nach einem der Ansprüche 1 - 16, **dadurch gekennzeichnet, dass** diese einen Schubspindelantrieb insbesondere für ein Beschattungssystem aufweist.
